# FASCICULE DE BREVET EUROPEEN

(11) **EP 2 903 700 B1**
(45) Date de publication et mention de la délivrance du brevet: **28.02.2018**
(21) Numéro de dépôt: 13776841.2
(22) Date de dépôt: 18.09.2013
(51) Int. Cl.: A63B 6/02, B64F 1/02, B64C 25/00, B64F 1/00, B64D 25/00

(54) **DISPOSITIF POUR RECEPTIONNER UN AERONEF**
LANDEEINRICHTUNG FÜR FLUGZEUGE
LANDING DEVICE FOR AIRCRAFT

(30) Priorité: 02.10.2012 FR 1259310
(43) Date de publication de la demande: 12.08.2015
(73) Titulaire: Musthane, 59780 Willems (FR)
(72) Inventeur: ROSIER, Reza, B-7711 Dottignies (BE)
(74) Mandataire: Balesta, Pierre
(86) Numéro de dépôt international: PCT/FR2013/052159
(87) Numéro de publication internationale: WO 2014/053726

(56) Documents cités:
- WO-A1-92/00876
- WO-A1-2011/117863
- FR-A1- 2 829 400
- JP-A- H10 305 800
- US-A- 2 850 252
- US-A- 2 920 846
- US-A- 3 840 922
- US-A- 3 851 730
- US-B1- 6 371 410

## Description

### Arrière-plan de l'invention

La présente invention a pour objet un dispositif pour réceptionner un aéronef, et en particulier un hélicoptère. Elle trouve en particulier une application pour l'atterrissage d'un aéronef dont les moyens habituels d'atterrissage, tels que ses roues ou ses patins constituant son train d'atterrissage, sont défectueux ou endommagés, en permettant un atterrissage sûr, qui limite les dommages causés à l'aéronef et à ses passagers. L'arrière-plan technologique est illustré par les documents US2920846, Us2850252 et US6371410. On connaît des hélicoptères qui disposent de flotteurs, tels que des « airbags », disposés à proximité des moyens habituels d'atterrissage et qui sont intégrés à l'hélicoptère, les flotteurs pouvant être gonflés préalablement à l'atterrissage de l'hélicoptère pour venir en remplacement des moyens habituels d'atterrissage. Le problème posé par ce type de flotteurs est qu'ils présentent un encombrement et un poids significatifs, qui peuvent compliquer la fabrication et le pilotage de tels hélicoptères.

Par ailleurs, ces flotteurs devant être montés sur l'hélicoptère lors de sa fabrication, le problème de la réception d'urgence d'hélicoptères ne comportant pas de tels flotteurs n'est pas résolu. En particulier, de nombreux types d'hélicoptères ne comportent pas de tels flotteurs.

Une solution alternative peut également consister à former des espaces de réception d'urgence, désignés habituellement par l'expression « berceaux de crash », constitués par exemple de palettes sur lesquelles sont superposés des sacs de sable, de tels espaces étant configurés pour permettre à l'hélicoptère endommagé de se poser en évitant d'entrer en contact directement et brutalement avec le sol, et d'éviter, entre autres, que les pales de l'hélicoptère n'entrent en contact avec le sol, ce qui aurait pour effet de provoquer des dommages significatifs, voire irrémédiables, sur l'hélicoptère, et de blesser les passagers de l'hélicoptère ainsi que les personnes évoluant à proximité des espaces de réception d'urgence. L'hélicoptère est ainsi réceptionné de manière stable, le berceau de crash permettant de pallier l'absence de train d'atterrissage de l'hélicoptère.

Par ailleurs, la constitution de tels espaces de réception d'urgence rend leur utilisation complexe sur des héliports temporaires ou exigus, les contraintes de poids et d'encombrement de tels héliports ne permettant pas la présence de sacs de sable et de palettes.

### Objet et résumé de l'invention

La présente invention a pour but de proposer un dispositif permettant une procédure d'atterrissage d'urgence d'un aéronef, et en particulier d'un hélicoptère, le dispositif étant destiné à être disposé au sol et pouvant être facilement et rapidement transporté et mis en place.

Ce but est atteint par le fait que l'invention porte sur un dispositif pour réceptionner un hélicoptère selon la revendication 1. Ce dispositif est en mesure de réceptionner un hélicoptère de manière stable lors de son atterrissage, le dispositif comportant au moins une poche gonflable principale comprenant un moyen d'introduction d'un fluide pour gonfler la poche gonflable principale et une paroi supérieure sensiblement plane sur laquelle l'hélicoptère vient se poser, ladite paroi supérieure étant constituée d'au moins une couche textile recouverte d'au moins une couche en polymère.

Ainsi, ce dispositif est destiné à être disposé sur une surface permettant de recevoir un hélicoptère, tel que par exemple le sol ou un plateau mobile ; le dispositif ne requiert pas que les hélicoptères disposent d'un équipement particulier.

En outre, en présentant une paroi supérieure sensiblement plane, ou présentant au moins une portion sensiblement plane, sur laquelle l'hélicoptère peut venir se poser de manière sensiblement identique aux atterrissages traditionnels dans lesquels les moyens habituels d'atterrissage peuvent fonctionner normalement, le dispositif permet de limiter les dommages que pourrait subir l'hélicoptère lors de son contact direct et brutal avec le sol, ainsi que les risques de blessures qu'un tel atterrissage pourrait occasionner sur les passagers de l'hélicoptère ainsi que sur les personnes évoluant à proximité de la zone d'atterrissage.

On comprend donc que l'utilisation d'un dispositif selon la présente invention permet de réceptionner l'hélicoptère de manière stable, sans détériorer l'hélicoptère, ni mettre en danger ses passagers.

L'utilisation d'une couche textile pour constituer la paroi supérieure permet, entre autres, de faciliter sa fabrication et d'améliorer sa résistance.

Par ailleurs, la capacité de la poche principale à être gonflée permet de limiter son encombrement, et donc de faciliter son rangement et son transport, lorsqu'elle n'est pas utilisée pour réceptionner des aéronefs. En outre, la présence d'un moyen d'introduction d'un fluide permet de gonfler rapidement et facilement la poche gonflable principale, de sorte qu'elle puisse être installée et mise en place pour réceptionner un aéronef.

Par la présence de polymère recouvrant la couche textile, la poche gonflable principale peut résister aux forces exercées par l'aéronef lors de son atterrissage d'urgence, ces forces étant principalement dues au poids de l'aéronef, et pouvant être également liées à sa vitesse, même si celle-ci est habituellement réduite lors de la phase d'atterrissage, au moment de son contact avec le dispositif ; par ailleurs, la présence de polymère assure l'étanchéité de la poche gonflable, et protège la couche textile contre, par exemple et de manière non limitative, l'abrasion, les UV, les agressions chimiques telles que celles engendrées par le kérosène s'échappant de l'aéronef. Ainsi, en protégeant la couche textile de la poche gonflable principale, le polymère permet également d'éviter que la poche gonflable principale ne soit perforée par des pièces faisant saillie depuis l'aéronef, telles que par exemple des antennes disposées sur la partie inférieure de l'aéronef ou des portions des moyens habituels d'atterrissage.

La superposition de la couche textile et de la couche en polymère sur la paroi supérieure de la poche gonflable principale peut, de préférence, être reproduite ou complétée par d'autres matériaux tels que des couches en aramide ou des couches textiles formées à partir de fils métalliques, de telle sorte que la paroi supérieure de la poche gonflable principale peut être constituée par la superposition de plusieurs couches textiles entre lesquelles est intercalée au moins une couche en polymère.

L'utilisation du polymère assure donc l'étanchéité et la protection de la couche textile ; l'utilisation du polymère permet ainsi d'assurer, de manière indirecte, la solidité de la poche gonflable principale ; la combinaison de la couche textile et de la couche en polymère permet par ailleurs de présenter à l'hélicoptère destiné à être réceptionné par le dispositif une surface sensiblement plane suffisamment rigide pour faciliter la réception, et assurer la stabilité de l'hélicoptère lorsqu'il est disposé sur la paroi supérieure du dispositif.

L'invention est déclinée ci-après dans une série de variantes de réalisation, qui peuvent être considérées seules ou en combinaison avec une ou plusieurs des précédentes.

Avantageusement, le polymère est un élastomère.

De manière avantageuse, on peut prévoir la présence de PVC ou de polyuréthane (PU) sur la couche textile constituant la paroi supérieure, ou de tout autre matériau présentant des propriétés intéressantes d'allongement à la rupture, d'adhérence, de résistance aux UV, aux agressions chimiques, à l'abrasion, ...

De préférence, l'élastomère est fixé sur la couche textile par un procédé d'adhérisation, tel que par exemple une enduction par extrusion, un calandrage, une vulcanisation... On peut également prévoir la présence d'une couche de résine adhérisante sur la couche textile, activée sous l'effet d'une source de chaleur, et qui permet de coller l'élastomère.

De manière avantageuse, la couche textile est constituée d'un matériau tissé.

Par exemple, et de manière non limitative, la couche textile est un matériau tissé en chaîne et trame.

De préférence, la couche textile est un support textile double pli ; par support textile double pli, il faut comprendre tout support textile comportant au moins deux couches de textile, sans que les deux couches ne soient nécessairement liées l'une à l'autre, au cours, par exemple, d'une opération de tissage.

De préférence, la poche gonflable principale comprend en outre une paroi inférieure constituée d'au moins une couche textile.

Avantageusement, la couche textile de la paroi inférieure est constituée d'un matériau tissé.

De manière avantageuse, la paroi inférieure est également sensiblement plane.

Avantageusement, les parois inférieure et supérieure définissent deux plans disposés de manière sensiblement parallèle l'un à l'autre.

Par l'utilisation de matériau tissé pour constituer à la fois la paroi supérieure et la paroi inférieure de la poche gonflable principale, la fabrication est simplifiée et ses coûts peuvent être réduits. Par ailleurs, la constitution de la paroi inférieure par un matériau tissé permet également de limiter les risques de perforation de la paroi inférieure, par exemple par des éléments pointus qui seraient présents sur le sol sur lequel est placé le dispositif selon la présente invention.

La surface sensiblement plane définie par la paroi inférieure assure pour sa part la stabilité du dispositif gonflable sur le sol, de manière à faciliter la réception de l'hélicoptère et d'assurer également sa stabilité lorsqu'il a été réceptionné. Les matériaux tissés constituant les parois inférieure et supérieure sont liés entre eux pour former la poche gonflable principale pendant une même opération de tissage. La poche gonflable comprend en outre une pluralité d'éléments de jonction disposés dans le volume intérieur de la poche gonflable principale et liant les parois supérieure et inférieure en sorte de fixer la distance séparant les parois supérieure et inférieure lorsque la poche gonflable principale est gonflée.

Par cette disposition, les parois supérieure et inférieure de la poche gonflable principale peuvent définir deux plans distincts, permettant ainsi de faciliter la réception de l'aéronef et la mise en place au sol du dispositif selon la présente invention. De préférence, les plans définis par les parois supérieure et inférieure sont parallèles. On comprend qu'en l'absence d'éléments de jonction liant les parois supérieure et inférieure, la poche gonflable principale, une fois gonflée, présenterait une surface supérieure bombée sur laquelle il serait difficile pour un aéronef d'atterrir de manière stable, et une surface inférieure également bombée, qui compromettrait la stabilité du dispositif et compliquerait, par conséquent, l'atterrissage de l'aéronef. La poche gonflable principale est formée dans un textile en trois dimensions qui comprend une première et une seconde faces constituant respectivement les parois supérieure et inférieure de la poche gonflable, ledit textile comprenant des fils de liaison liant les première et seconde faces entre elles, les fils de liaison constituant les éléments de jonction.

La poche gonflable principale présente ainsi deux faces sensiblement planes, de préférence parallèles l'une à l'autre, les faces étant entretoisées par la pluralité d'éléments de jonction disposés dans le volume intérieur de la poche gonflable.

De préférence, les éléments de jonction présentent des propriétés de souplesse configurées pour permettre aux première et seconde faces d'être rapprochées l'une de l'autre, lorsque la poche gonflable principale n'est pas gonflée, de manière à assurer la compacité du dispositif.

Avantageusement, les éléments de jonction présentent des propriétés de résistance configurées pour permettre aux éléments de jonction de ne pas rompre lorsque la poche gonflable principale est gonflée et que les première et seconde faces sont écartées l'une de l'autre.

De manière avantageuse, les éléments de jonction présentent une longueur déterminée et constante, au moins dans la partie de la poche gonflable principale distante des zones dans lesquelles les parois supérieure et inférieure de la poche gonflable principale sont solidarisées l'une à l'autre, de manière à assurer la planéité d'au moins la première face.

On comprend également que la densité des éléments de jonction est déterminée de manière à assurer la planéité des parois supérieure et inférieure, et en particulier de la paroi supérieure.

De préférence, le textile en trois dimensions est du type « drop stitch », tissu tridimensionnel ou tissu double paroi.

Avantageusement, l'élément de jonction est un fil issu de l'un des matériaux tissés constituant l'une des parois supérieure et inférieure, qui est entrelacé entre les fils du matériau tissé constituant l'autre des parois supérieure et inférieure.

Par faces internes, on comprend les faces des parois supérieure et inférieure disposées en regard l'une de l'autre et qui délimitent le volume intérieur de la poche gonflable principale.

On comprend que la présence d'au moins une couche de polymère sur la paroi supérieure de la poche gonflable principale permet d'assurer l'étanchéité de la première face et d'assurer, indirectement, en protégeant la couche textile de la poche gonflable contre différentes agressions, la rigidité de la paroi supérieure, afin de faciliter la réception stable de l'hélicoptère.

De manière avantageuse, la paroi inférieure comprend également une couche de polymère, de manière à assurer la rigidité de la paroi inférieure configurée pour être disposée, par exemple, sur le sol, ainsi que pour assurer l'étanchéité de la poche gonflable.

De préférence, la paroi supérieure comprend en outre au moins une couche en aramide recouvrant la couche de polymère.

De préférence, mais pas exclusivement, une couche de polymère recouvre la couche d'aramide.

Avantageusement, la paroi supérieure est recouverte d'une surface souple configurée pour empêcher la perforation de la poche gonflable principale par les antennes ou par toute autre protubérance disposée sur la partie inférieure de l'aéronef.

De manière avantageuse, la paroi supérieure comprend en outre au moins une couche en textile réalisée à partir de fils métalliques recouvrant la couche de polymère qui recouvre la paroi supérieure.

De préférence, les fils métalliques sont enduits de polymère.

De préférence, mais pas exclusivement, une couche de polymère recouvre la couche en textile réalisée à partir de fils métalliques.

La présence d'une couche en aramide, d'une surface souple ou de fils métalliques sur la paroi supérieure permet d'améliorer la résistance de la paroi supérieure ainsi que son étanchéité, et d'accroître la résistance à la perforation de la poche gonflable principale, sans augmenter significativement le poids du dispositif.

Avantageusement, la couche en aramide, la surface souple ou la couche de fils métalliques est solidarisée sur la paroi supérieure, et plus particulièrement sur la couche de polymère disposée sur la couche textile de la paroi supérieure de la poche gonflable principale, par collage, par vulcanisation ou par tout autre moyen de solidarisation.

De manière avantageuse, les parois inférieure et supérieure de la poche gonflable principale présentent une forme sensiblement rectangulaire, leur largeur étant comprise entre 80 et 120 cm, et plus particulièrement comprise entre 90 et 110 cm, leur longueur étant comprise entre 150 et 250 cm, et plus particulièrement comprise entre 180 et 230 cm.

Par ces dimensions, on comprend que le dispositif peut être aisément mis en place sur tout type d'emplacement, tel que par exemple sur un héliport.

Par ailleurs, les dimensions de la poche gonflable principale sont telles qu'elles permettent la réception de nombreux types d'aéronefs, tels que par exemple des hélicoptères.

De préférence, le dispositif comporte en outre au moins une poche gonflable inférieure disposée sous la poche gonflable principale.

De préférence, la poche gonflable inférieure présente une structure similaire à celle de la poche gonflable principale.

De manière avantageuse, le dispositif comporte une pluralité de poches gonflables superposées les unes sur les autres.

On comprend ainsi qu'on désigne par poche gonflable principale la poche gonflable disposée à l'extrémité supérieure de l'empilement constituée par les poches gonflables superposées ; en d'autres termes, on désigne par poche gonflable principale la poche gonflable dont la paroi supérieure est sensiblement plane et est configurée pour permettre la réception d'un hélicoptère.

La superposition de plusieurs poches gonflables permet d'adapter le dispositif selon la présente invention au type d'aéronef qu'il est destiné à réceptionner. On comprend en particulier que le dispositif selon la présente invention présente des propriétés de modularité qui permettent de réduire son coût de fabrication et de l'adapter aisément à différents besoins.

On comprend qu'au moins la paroi supérieure de la poche gonflable principale est plane, de manière à permettre une réception stable de l'hélicoptère.

Avantageusement, les parois supérieure et inférieure des poches gonflables principale et inférieure sont planes.

De manière avantageuse, les parois supérieure et inférieure des poches gonflables principale et inférieure sont parallèles les unes aux autres.

Par cette disposition, le dispositif permet une réception et un maintien stables de l'hélicoptère.

De préférence, les différentes poches gonflables sont solidarisées les unes aux autres par collage, par soudure, par vulcanisation, ou par tout autre moyen de solidarisation.

Avantageusement, le dispositif comporte en outre au moins une poche gonflable latérale, les poches gonflables latérale et principale étant disposées côte à côte.

De manière avantageuse, les poches gonflables principale et latérale ne sont pas disposées de manière contiguë, de manière à définir une dépression formée entre les poches gonflables principale et latérale.

De préférence, la poche gonflable latérale présente une structure similaire à celle de la poche gonflable principale.

On comprend donc que, lorsque le dispositif comporte une pluralité de poches gonflables similaires disposées côte à côte, on désigne par poche gonflable principale l'une de ces poches gonflables.

Par cette disposition, dans le cas où l'aéronef comporte, sur sa partie inférieure, une protubérance significative, telle que par exemple une portion de train d'atterrissage ou des antennes, l'aéronef peut être réceptionné sur le dispositif de telle sorte que sa protubérance soit réceptionnée par l'une des poches latérales, alors que le reste de l'aéronef sera réceptionné par les autres poches gonflables, de manière à adapter l'écrasement des différentes poches gonflables à la portion de l'aéronef qu'elles réceptionnent respectivement. En d'autres termes, la présence d'une pluralité de poches gonflables permet de tenir compte des différents profils de la surface extérieure de la partie inférieure de l'aéronef, l'écrasement subi par les poches gonflables pouvant être différent d'une poche à une autre. Ainsi, le dispositif peut réceptionner de nombreux types d'aéronefs, présentant des états d'endommagement variables.

En outre, dans l'éventualité où la protubérance perforerait la poche gonflable sur laquelle elle est réceptionnée, la stabilité de la réception de l'aéronef ne serait pas compromise, les autres poches gonflables assurant le maintien stable de l'aéronef sur le dispositif.

De préférence, le dispositif comporte en outre un moyen de communication permettant au fluide introduit par le moyen d'introduction d'un fluide de gonfler les différentes poches gonflables.

Par cette disposition, on comprend qu'un seul moyen d'introduction d'un fluide est nécessaire pour permettre le gonflage des différentes poches gonflables. Ainsi, le gonflage du dispositif est simplifié, une seule source de fluide étant nécessaire pour la mise en volume du dispositif.

Avantageusement, le dispositif comporte au moins deux moyens d'introduction d'un fluide configurés pour permettre de gonfler de manière indépendante au moins deux poches gonflables.

Par cette disposition, on comprend qu'en fonction des usages ou des contraintes environnantes, seules certaines poches gonflables seront gonflées. Par ailleurs, la présence de différents moyens d'introduction d'un fluide permet d'accélérer la mise en volume du dispositif. Enfin, on comprend que, dans l'éventualité où l'une des poches gonflables serait défectueuse, le fonctionnement du dispositif ne serait pas compromis, la présence d'autres poches gonflables à l'état gonflé permettant la réception de l'aéronef.

De manière avantageuse, le dispositif comporte des moyens d'ancrage configurés pour permettre l'ancrage au sol du dispositif avec un élément d'attache rigide enfoncé dans le sol.

Par la présence des moyens d'ancrage, le dispositif selon la présente invention peut être fixé au sol, de telle sorte qu'il ne soit pas mis en mouvement, par exemple par l'air déplacé lors de l'approche de l'aéronef sur le point d'être réceptionné, une telle mise en mouvement intempestive du dispositif risquant à la fois de compliquer la réception de l'aéronef, et de blesser les personnes situées à proximité du dispositif.

Avantageusement, les moyens d'ancrage peuvent être des boucles coopérant par l'intermédiaire de liens, tels que par exemple des sangles, avec des boucles ou des crochets formés sur le sol sur lequel se trouve le dispositif.

De préférence, le dispositif comporte un dispositif d'évacuation configuré pour permettre l'évacuation du fluide contenu dans la poche gonflable lorsque la pression du fluide dépasse une valeur limite.

Par la présence du dispositif d'évacuation, on comprend que le risque que la poche gonflable éclate lors de la réception de l'aéronef est limité ; par ailleurs, la présence du dispositif d'évacuation permet de maintenir une pression constante dans le volume intérieur de la poche gonflable.

On comprend donc que, préalablement à la réception de l'hélicoptère, la poche gonflable est gonflée, de manière qu'au moins sa paroi supérieure soit disposée de manière sensiblement plane pour constituer une zone d'atterrissage pour l'hélicoptère.

L'hélicoptère peut ainsi être réceptionné sur le dispositif, en dépit des possibles détériorations de son train d'atterrissage. Par suite, la pression du fluide contenu dans la poche gonflable augmente du fait du poids de l'hélicoptère réceptionné sur le dispositif.

Afin de maintenir une pression constante dans la poche gonflable, le fluide contenu dans la poche gonflable est partiellement évacué par le dispositif d'évacuation.

Le maintien d'une pression constante dans la poche gonflable permet en particulier que le dispositif ne s'affaisse pas significativement et brutalement lors de la réception de l'hélicoptère, ce qui aurait pour effet de mettre l'hélicoptère soudainement et directement en contact avec le sol, risquant alors d'endommager l'hélicoptère, voire de blesser ses occupants. On comprend donc que le dispositif de la présente invention permet à l'hélicoptère d'être maintenu de manière sensiblement stable et plane, après sa réception.

De préférence, la pression interne du fluide contenu dans la poche gonflable gonflée pour réceptionner l'hélicoptère est comprise entre 0.1 et 1 bar, de préférence comprise entre 0.4 et 0.6 bar.

L'invention porte également sur un ensemble pour réceptionner un hélicoptère lors de son atterrissage, comportant un dispositif selon la présente invention, un filet configuré pour recouvrir le dispositif et des moyens de fixation configurés pour fixer le filet au sol.

Le filet associé aux moyens de fixation permet de maintenir le dispositif à un emplacement déterminé, quelles que soient les conditions climatiques environnantes, ou lors de l'approche de l'aéronef.

Avantageusement, l'ensemble comporte en outre un dispositif de commande configuré pour commander le gonflage des différentes poches gonflables indépendamment les unes des autres.

Par la présence du dispositif de commande, le nombre de poches gonflées peut être adapté au type d'aéronef à réceptionner. Ainsi, pour un aéronef de grandes dimensions, plusieurs poches gonflables devront être gonflées, alors que pour un aéronef de dimensions réduites, ou lorsque le dispositif est mis en place sur un emplacement particulièrement exiguë, seules certaines poches gonflables seront gonflées.

De manière avantageuse, l'ensemble comporte en outre un plateau mobile sur lequel le dispositif peut être gonflé.

Par ce moyen, le dispositif peut aisément être déplacé, afin d'être disposé de manière optimale pour réceptionner l'aéronef, sans gêner les autres activités réalisées à proximité de l'emplacement sur lequel est placé le dispositif.

La mobilité du plateau permet également, après la réception de l'hélicoptère, de l'évacuer vers un endroit déterminé, où il pourra, par exemple, être réparé.

Le plateau peut être mobile de manière autonome, en comportant par exemple un moteur, ou peut être déplacé par un véhicule, tel qu'un tracteur.

Enfin, l'invention porte sur l'utilisation du dispositif selon la présente invention pour réceptionner un hélicoptère lors de son atterrissage.

On comprend que le dispositif peut éventuellement être gonflé en permanence ; il peut alternativement être mis en volume lors de l'approche d'un hélicoptère requérant l'utilisation d'un dispositif d'urgence selon la présence invention. Une fois l'hélicoptère réceptionné, les poches gonflables peuvent être dégonflées progressivement, de manière contrôlée, de manière à ce que l'hélicoptère soit disposé sur le sol sans subir d'autres dommages ; on peut également concevoir un dispositif de transfert, tel que par exemple une grue, permettant de saisir l'hélicoptère sur la poche gonflable pour le disposer sur un moyen de transport ou sur un espace sur lequel il pourra, par exemple, être réparé.

### Brève description des dessins

D'autres caractéristiques et avantages de l'invention apparaîtront plus clairement et de manière complète à la lecture de la description ci-après de plusieurs modes de réalisation préférés, donnés à titre d'exemple non limitatif et en référence aux dessins annexés suivants sur lesquels :
- la figure **1** représente schématiquement un premier exemple de dispositif selon la présente invention mis en volume pour réceptionner un aéronef ;
- la figure **2** représente schématiquement une vue en coupe du dispositif de la figure **1** ;
- la figure **3** représente schématiquement un deuxième exemple de dispositif selon la présente invention mis en volume pour réceptionner un aéronef ;
- les figure **4A** et **4B** représentent schématiquement un troisième exemple de dispositif selon la présente invention, le dispositif n'étant pas mis en volume ; et
- la figure **5** représente schématiquement un exemple d'ensemble pour réceptionner un aéronef selon la présente invention.

### Description détaillée de l'invention

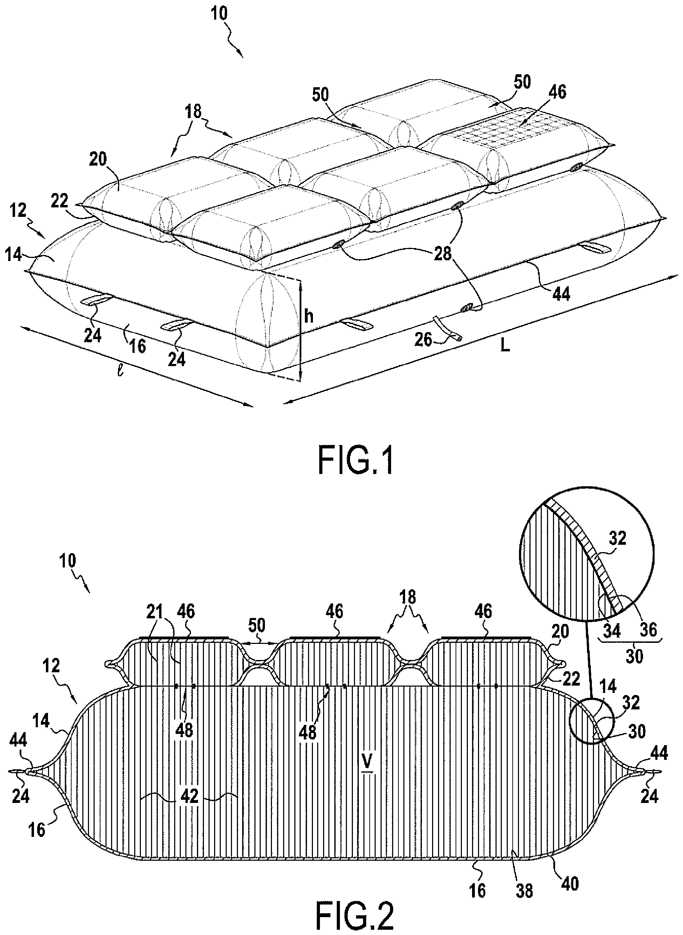

Dans l'exemple représenté à la figure **1****,** le dispositif **10** selon la présente invention comporte une poche gonflable inférieure **12,** constituée d'une paroi supérieure **14** et d'une paroi inférieure **16,** et une pluralité de poches gonflables supérieures **18,** chaque poche gonflable supérieure **18** étant elle-même constituée d'une paroi supérieure **20** et d'une paroi inférieure **22.**

Tel que cela apparaîtra dans la suite de la description, les différentes poches **12, 18** du dispositif **10** présentent une structure similaire. On désignera ainsi par poche gonflable principale, de manière indifférente, l'une des poches gonflables supérieures **18.** On pourrait également concevoir, et sans sortir du cadre de la présente invention, un dispositif comportant une unique poche gonflable **18** selon la présente invention, ladite poche gonflable **18** pouvant être disposée sur et/ou entourée d'éléments, tels que des poches, des sacs de sable ou des palettes, ne présentant pas la même structure que la poche gonflable 18. Tel que représenté sur la figure **1****,** la poche gonflable inférieure **12** et les poches gonflables supérieures **18** peuvent présenter un état gonflé ; par exemple et de manière non limitative, dans l'état gonflé, la poche gonflable inférieure **12** présente la forme d'un parallélépipède rectangle définissant une hauteur **h,** une largeur **I,** et une longueur **L,** les poches gonflables supérieures **18** présentant également, par exemple et de manière non limitative, la forme de parallélépipède rectangles de moindres dimensions

Par exemple, et de manière non limitative, la hauteur h de la poche gonflable supérieure **12** est comprise entre 10 et 50 cm, de préférence comprise entre 20 et 30 cm, sa largeur **I** est comprise entre 80 et 120 cm, de préférence comprise entre 90 et 110 cm et sa longueur L est comprise entre 150 et 250 cm, de préférence comprise entre 180 et 230 cm.

On pourrait également concevoir, et sans sortir du cadre de la présente invention, des poches gonflables **12, 18** présentant toutes autres dimensions, ou toute autre forme, telle que par exemple une forme cylindrique ou cubique.

Tel que représenté sur la figure **1****,** les parois supérieure **14** et inférieure **16** de la poche gonflable inférieure **12** sont liées l'une à l'autre par des moyens de solidarisation **44,** les moyens de solidarisation **44** étant disposés sur les bordures des parois **14, 16** de la poche gonflable inférieure **12.** Ainsi, lorsqu'elle se trouve dans l'état gonflé, la poche gonflable inférieure **12** délimite un volume intérieur **V.**

En outre, la poche gonflable inférieure **12** comporte des moyens d'ancrage **24** disposés sur la face externe de la poche gonflable inférieure **12.** Par face externe, on comprend la face de la poche gonflable inférieure **12** opposée au volume intérieur **V.** Par exemple, et de manière non limitative, les moyens d'ancrage **24** sont constitués de sangles maintenues entre les parois supérieure **14** et inférieure **16** de la poche gonflable inférieure **12,** et fixées aux moyens de solidarisation **44.** On comprend que les moyens d'ancrage **24** sont configurés de telle sorte qu'ils permettent d'ancrer au sol S le dispositif **10,** des éléments d'ancrage, tels que par exemple des piquets ou des tiges, pouvant être engagés dans les moyens d'ancrage **24** avant d'être enfoncés dans le sol **S.** On pourrait également concevoir, et sans sortir du cadre de la présente invention, des moyens d'ancrage **24** constitués de crochets, d'oeillets, ou de tout autre moyen configuré pour permettre l'ancrage de la poche gonflable inférieure **12** dans le sol **S.**

En outre, la poche gonflable inférieure **12** comporte un moyen d'introduction **26** d'un fluide **F** formé dans la paroi inférieure **16** de la poche gonflable inférieure **12.** Par exemple, et de manière non limitative, le moyen d'introduction **26** du fluide **F** est constitué d'une portion de tuyau équipée d'un embout d'introduction ; on pourrait également concevoir, et sans sortir du cadre de la présente invention, un moyen d'introduction **26** du fluide **F** constitué d'une valve ou de tout autre moyen permettant d'introduire le fluide **F,** tel que par exemple de l'air ou du liquide, à l'intérieur de la poche gonflable inférieure **12.** Sans sortir du cadre de la présente invention, le moyen d'introduction **26** peut être formé dans la paroi supérieure **14,** ou sur les moyens de solidarisation **44.**

La poche gonflable inférieure **12** ainsi que les poches gonflables supérieures **18** comportent chacune un dispositif d'évacuation **28** dont l'utilité apparaîtra plus clairement dans la suite de la description.

Tel que représenté sur la figure **1****,** les poches gonflables supérieures **18** sont fixées, par exemple par collage, couture, vulcanisation ou tout autre procédé de fixation, sur la poche gonflable inférieure **12 ;** on comprend donc que les parois inférieures **22** des poches gonflables supérieures **18** sont fixées sur la paroi supérieure **14** de la poche gonflable inférieure **12.**

Tel que cela apparaît plus clairement sur la figure **2** qui représente une vue en coupe du dispositif **10** de la figure **1****,** la paroi supérieure **14** de la poche gonflable inférieure **12** est constituée d'une couche textile **30** recouverte d'au moins une couche en polymère **32.**

On comprend que la couche textile **30** présente une face interne **34,** dirigée vers le volume intérieur **V** de la poche gonflable inférieure **12,** et une face externe **36** opposée à la face interne **34.** La couche en polymère **32** est fixée sur la face externe **36** de la couche textile **30,** par exemple par collage, soudure ou tout autre procédé de fixation.

On peut également concevoir, et sans sortir du cadre de la présente invention, la présence sur la face externe **36** de la couche textile **30** d'une couche de tout autre matériau présentant des propriétés intéressantes de résistance à l'abrasion et à différentes attaques, et de souplesse, tel que par exemple du PVC ou du polyuréthane (PU).

Par exemple et de manière non limitative, la paroi inférieure **16** de la poche gonflable inférieure **12** est également constituée d'une couche textile **38** recouverte, sur sa face externe, d'une couche en polymère **40.**

La poche gonflable inférieure **12** comporte également une pluralité d'éléments de jonction **42,** disposés dans le volume intérieur **V** formé par la poche gonflable inférieure **12** et liant les faces internes des couches textiles **30** et **38** constituant les parois supérieure **14** et inférieure **16.**

Par exemple et de manière non limitative, les couches textiles **30, 38** sont constituées d'un matériau tissé du type chaîne et trame, les couches textiles constituant les parois supérieure **14** et inférieure **16** étant solidarisées l'une à l'autre au cours de leur tissage.

On pourrait également concevoir, et sans sortir du cadre de la présente invention, des couches textiles **30, 38** tissées indépendamment l'une de l'autre pour constituer respectivement les parois supérieure **14** et inférieure **16,** les parois **14, 16** étant par la suite liées l'une à l'autre par les moyens de solidarisation **44.**

Les éléments de jonction **42** peuvent être constitués de fils issus du matériau tissé constituant l'une des couches textiles **30, 38** des parois supérieure **14** et inférieure **16,** les fils étant entrelacés entre les fils du matériau tissé constituant l'autre des couches textiles **30, 38** des parois supérieure **14** et inférieure **16.** On comprend donc que, par exemple et de manière non limitative, la poche gonflable inférieure **12** peut être formée à partir de tissu tridimensionnel, autrement appelé tissu double paroi ou tissu « drop stitch ».

Ainsi le tissu dans lequel est formée la poche gonflable inférieure **12** comprend des fils de liaison liant les parois supérieure **14** et inférieure **16,** et plus particulièrement leurs faces internes respectives, entre elles, les fils de liaison constituant les éléments de jonction **42.**

On comprend que le textile dans lequel est formée la poche gonflable inférieure **12** comprend une première et une seconde faces constituant respectivement les couches textiles **30, 38** des parois supérieure **14** et inférieure **16.** La poche gonflable inférieure **12** présente ainsi une paroi supérieure **14** sensiblement plane, la paroi inférieure **16** étant également, par exemple et de manière non limitative, plane, les plans définis par les parois supérieure **14** et inférieure **16** étant, par exemple, parallèles l'un à l'autre.

Les faces du textile sont ainsi entretoisées par la pluralité d'éléments de jonction **42** disposés dans le volume intérieur **V** de la poche gonflable inférieure **12,** les éléments de jonction **42** présentant des propriétés de souplesse configurées pour permettre aux première et seconde faces d'être rapprochées l'une de l'autre, lorsque la poche gonflable inférieure **12** n'est pas gonflée, et des propriétés de résistance configurées pour permettre aux éléments de jonction **42** de ne pas rompre lorsque la poche gonflable inférieure **12** est gonflée et que les première et seconde faces sont écartées l'une de l'autre.

Par exemple et de manière non limitative, les éléments de jonction **42** présentent une longueur déterminée et constante, au moins dans la région du volume intérieur **V** distante des moyens de solidarisation **44,** de manière à assurer la planéité d'au moins une partie de la paroi supérieure **14.**

Les couches en polymère **32, 38,** disposées sur les parois supérieure **14** et inférieure **16** de la poche gonflable inférieure 12, assurent l'étanchéité de la poche gonflable inférieure **12,** pour contenir le fluide dans son volume intérieur **V** ; en outre, en protégeant la couche de textile sur laquelle elles sont disposées contre tout type d'abrasion et d'attaque, elles permettent indirectement de rigidifier les parois supérieure **14** et inférieure **16,** de manière à permettre la stabilité à la fois de la réception d'un hélicoptère et de la mise en place du dispositif **10.** On pourrait également concevoir, et sans sortir du cadre de la présente invention, des éléments de jonction **42** constitués par exemple de sangles souples solidarisées par couture, collage ou soudure aux faces internes des couches textiles **30, 38** constituant les parois inférieure **16** et supérieure **14** de la poche gonflable inférieure **12.**

En d'autres termes, les éléments de jonction **42** permettent de fixer la distance séparant les parois supérieure **14** et inférieure **16** lorsque la poche gonflable inférieure **12** est dans l'état gonflé, tel que représenté sur la figure **2** ; en particulier, et tel que représenté sur les différentes figures de la présente demande, lorsque la poche gonflable inférieure **12** est dans l'état gonflé, la paroi supérieure **14** et la paroi inférieure **16** présentent une portion définissant une surface plane. De préférence, les portions planes formées par les parois supérieure **14** et inférieure **16** sont parallèles l'une à l'autre.

De manière similaire, les parois supérieure **20** et inférieure **22** des poches gonflables supérieures **18** sont également constituées d'au moins une couche textile dont la face externe est couverte d'au moins une couche en polymère, une pluralité d'éléments de jonction **21** liant les faces internes des parois supérieure **20** et inférieure **22** des poches gonflables supérieures **18.**

De manière similaire à la poche gonflable inférieure **12,** les éléments de jonction **21** assurent la planéité, en particulier, des parois supérieures **20** des poches gonflables supérieures **18,** une telle planéité permettant la réception stable d'un hélicoptère.

Ainsi, les éléments de jonction **21** des poches supérieures **18** peuvent également être formés, par exemple et de manière non limitative, de fils de liaison liant entre elles les faces internes des parois supérieure **20** et inférieure **22.**

Par ailleurs, et pour les mêmes raisons que celles détaillées lors de la description de la poche gonflable inférieure **12,** les parois inférieures **22** des poches gonflables supérieures **18** sont également planes, par exemple et de manière non limitative, selon un plan sensiblement parallèle à celui défini par les parois supérieures **20** des poches gonflables supérieures **18.**

Tel que représenté sur la figure **2****,** les parois inférieures **22** des poches gonflables supérieures **18** sont en contact avec la paroi supérieure **14** de la poche gonflable inférieure **12** par l'intermédiaire de leurs couches en polymère respective, les couches en polymère pouvant être collées, soudées, ou vulcanisées l'une avec l'autre.

Tel que représenté sur les différentes figures, la paroi supérieure **20** des poches gonflables supérieures **18** comprend une couche en aramide **46** recouvrant la couche en polymère disposée sur la couche textile constituant la paroi supérieure **20.**

Par exemple, et de manière non limitative, la paroi supérieure **20** peut également comprendre, en complément ou en remplacement de la couche en aramide **46,** une couche en textile réalisée à partir du tissage de fils métalliques, les fils métalliques pouvant, par exemple et de manière non limitative, être enduits de polymère.

Par ailleurs, tel que représenté sur la figure **2****,** des moyens de communication **48** sont formés dans les parois inférieures **22** des poches gonflables supérieures **18** et dans la paroi supérieure **14** de la poche gonflable inférieure **12,** ces moyens de communication **48** permettant au fluide **F** introduit par le moyen d'introduction **26** formé dans la poche gonflable inférieure **12** de gonfler également les poches gonflables supérieures **18.**

Par exemple et de manière non limitative, les moyens de communication **48** sont constitués de perforations formées dans les poches gonflables **12, 18** en regard les unes des autres.

Tel que représenté sur les différentes figures, les poches gonflables supérieures **18** sont disposées côte à côte de manière non contigüe, de manière à définir une dépression **50** entre deux poches gonflables supérieures adjacentes **18.** On comprend que la présence de ces dépressions permet aux différentes poches gonflables, lorsqu'elles sont dégonflées, d'être disposées de manière contiguë les unes aux autres, de manière à assurer la compacité du dispositif une fois dégonflé.

Ainsi, la présence d'une pluralité de poches gonflables supérieures **18** permet au dispositif **10** de s'adapter aux variations de profils de la surface extérieure de la partie inférieure d'un aéronef. Une protubérance s'étendant depuis la partie inférieure d'un aéronef peut ainsi être réceptionnée sur l'une des poches gonflables supérieures **18,** entraînant sa déformation, voire son écrasement, les autres poches gonflables supérieures **18** réceptionnant les autres parties de la surface inférieur de l'aéronef, pour assurer sa réception stable, de manière sensiblement plane. En outre, lorsque les poches gonflables supérieures **18** comportent des moyens d'introduction d'un fluide distincts, et dans l'éventualité où la protubérance de l'aéronef perforerait la poches gonflable supérieure **18** sur laquelle elle est réceptionnée, la stabilité de la réception de l'aéronef ne serait pas compromise.

On pourrait également concevoir, et sans sortir du cadre de la présente invention, des poches gonflables supérieures **18** disposées de manière adjacente les unes aux autres, ou la présence d'une unique poche gonflable supérieure **18,** dont les dimensions peuvent, par exemple et de manière non limitative, être égales, voire inférieures, à la longueur L et à la largeur **I** de la poche gonflable inférieure **12.**

On pourrait tout aussi bien concevoir un dispositif **10** qui ne comporterait qu'une poche gonflable supérieure **18,** la planéité de sa paroi supérieure **20** assurée par la présence de la pluralité d'éléments de jonction **21** permettant la réception stable d'un hélicoptère.

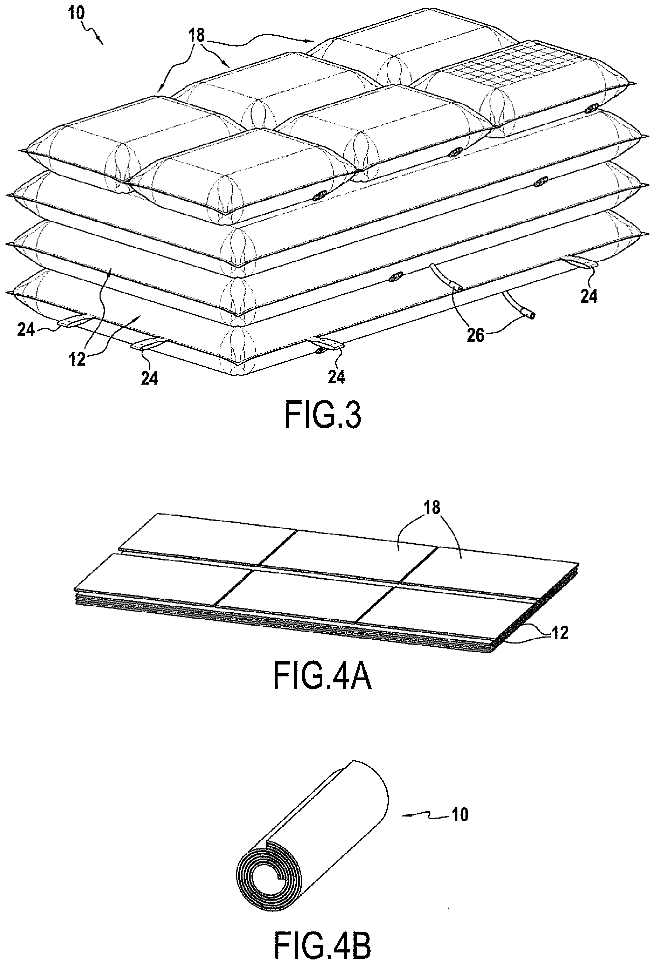

La figure **3** représente un second mode de réalisation du dispositif **10** selon la présente invention.

Tel que représenté sur la figure **3****,** le dispositif **10** comporte une pluralité de poches gonflables inférieures **12,** superposées les unes sur les autres ; par superposition, on comprend que sur la paroi supérieure **14** d'une première poche inférieure **12** est fixée, par exemple, par collage, soudure ou tout autre moyen de fixation, la paroi inférieure **16** d'une seconde poche gonflable inférieure **12.**

Dans l'exemple représenté sur la figure **3****,** le dispositif **10** est constitué de trois poches gonflables inférieures **12** superposées les unes sur les autres, au moins deux poches gonflables inférieures **12** comportant chacune un moyen d'introduction **26** du fluide **F.**

Lorsque des moyens de communication **48** sont formés entre les poches gonflables inférieures **12** superposées, on comprend que la présence de plusieurs moyens d'introduction **26** du fluide **F** permet d'accélérer la mise en volume du dispositif **10.** Alternativement, lorsqu'aucun moyen de communication **48** n'est formé entre les poches gonflables inférieures **12,** on comprend que les volumes intérieurs **V** des poches gonflables inférieures **12** ne communiquent pas entre eux, de telle sorte que les poches gonflables inférieures **12** peuvent être gonflées indépendamment les unes des autres, par exemple, pour ajuster la hauteur du dispositif **10.**

Les figures **4A** et **4B** représentent un exemple du dispositif **10** selon la présente invention dans lequel les poches gonflables inférieures **12** et supérieures **18** sont dans un état dégonflé. On comprend que, dans cet état, les éléments de jonction **21, 42** étant configurés de manière qu'ils sont maintenus rabattus entre les faces internes des parois supérieure et inférieure des poches gonflables **12, 18,** les faces internes des parois supérieures et inférieures des poches gonflables **12, 18** sont en contact respectivement les unes avec les autres.

Tel que représenté sur la figure **4B****,** le dispositif **10** présente alors un encombrement réduit, de telle sorte que le dispositif **10** peut être, par exemple, enroulé sur lui-même afin de faciliter son stockage ou son transport.

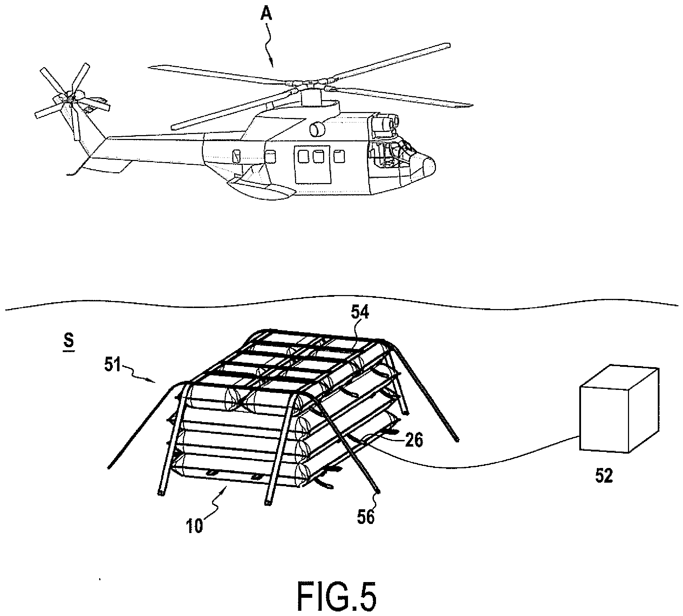

La figure **5** représente un exemple d'utilisation d'un ensemble **51** pour réceptionner un aéronef, en l'espèce un hélicoptère **A,** l'ensemble **51** comportant un dispositif **10** selon la présente invention.

Tel que représenté sur la figure **5****,** les poches gonflables inférieures **12** et supérieures **18** du dispositif **10** sont dans un état gonflé, une source **52** de fluide **F** étant liée au moyen d'introduction **26** formé dans la paroi inférieure **16** de l'une des poches gonflables inférieures **12.**

Tel que représenté sur la figure **5****,** l'ensemble **51** pour réceptionner l'hélicoptère **A** comporte également un filet **54** recouvrant le dispositif **10** et des moyens de fixation **56** permettant de fixer le filet **54** au sol **S.**

Tel que représenté sur la figure **5****,** à l'approche de l'hélicoptère **A,** les poches gonflables **12, 18** du dispositif **10** sont gonflées au moyen de la source **52** de fluide **F.** Par suite, le filet **54** fixé au sol **S** par les moyens de fixation **56** permet de maintenir le dispositif **10** en place. Tel que détaillé précédemment, le dispositif **10** peut également être maintenu en place par les moyens d'ancrage **24.**

On comprend que dans le cas où l'ensemble **51** comporte un filet **54** qui coopère avec des moyens de fixation **56,** les poches gonflables **12, 18** ne sont pas nécessairement fixées les unes aux autres. Ainsi, l'utilisation du filet **54** et des moyens de fixation **56** permet de combiner avec une plus grande liberté les différentes poches gonflables **12, 18.**

L'hélicoptère **A** peut ainsi être réceptionné par le dispositif **10,** en atterrissant sur les parois supérieures **20** des poches gonflables supérieures **18.** En particulier, lorsque l'hélicoptère **A** présente sur sa partie inférieure une protubérance significative, les différentes poches gonflables supérieures **18** vont être écrasées de manière distincte, de manière à permettre la réception stable et dans une position sensiblement plane de l'hélicoptère **A.**

On comprend que la composition de la paroi supérieure **14, 20** des poches gonflables **12, 18** détaillée à l'observation des figures précédentes et qui est obtenue par la combinaison de couches de textile, de matériaux tissés, de couches en polymère, de couches en aramide, ... a pour objectif d'améliorer sa résistance aux éléments faisant saillie depuis la partie inférieure de l'hélicoptère **A** et de limiter le risque que les poches gonflables **12, 18** ne soient perforées par de tels éléments faisant saillie lors de l'atterrissage de l'hélicoptère **A.** Par ailleurs, la composition de la paroi inférieure **16** de la poche gonflable inférieure **12,** détaillée à l'observation des figures précédentes, a pour objectif d'améliorer sa résistance aux éléments faisant saillie depuis la surface du sol **S** et de limiter ainsi le risque que la poche gonflable inférieure **12** ne soit perforée par de tels éléments faisant saillie lors de l'atterrissage de l'hélicoptère **A.**

Par ailleurs, et tel que détaillé précédemment, la présence des éléments de jonction **21** dans les volumes intérieurs d'au moins les poches gonflables supérieures **18,** assure la planéité des parois supérieures **20** des poches gonflables supérieures **18,** de manière à permettre à l'hélicoptère **A** de se poser de manière traditionnelle, en dépit de la dégradation possible de ses moyens d'atterrissage.

La réception de l'hélicoptère **A** conduit à augmenter brutalement la pression du fluide **F** contenu dans les poches gonflables **12, 18.** Le fluide **F** ainsi comprimé dans les poches gonflables **12, 18** est évacué par les dispositifs d'évacuation **28** formés dans les poches gonflables **12, 18** lorsque la pression du fluide **F** dépasse une valeur limite prédéterminée, afin de maintenir une pression du fluide **F** sensiblement constante pendant la réception de l'hélicoptère **A** et de limiter le risque que les poches gonflables **12, 18** n'éclatent lors de l'atterrissage de l'hélicoptère **A.**

De préférence, les dispositifs d'évacuation **28** sont constitués de valves ou de soupapes de surpression.

Par ailleurs, le maintien d'une pression constante dans le volume intérieur **V** des poches gonflables **12, 18** permet de maintenir l'hélicoptère **A** dans une position stable, et d'éviter qu'il ne s'affaisse, comme cela pourrait être le cas avec un dispositif du type de ceux utilisés pour réceptionner des objets ou des individus chutant, de tels dispositifs ne présentant habituellement pas de moyens d'étanchéité configurés pour maintenir un fluide dans leur volume intérieur.

On comprend qu'un tel affaissement soudain du dispositif **10** conduirait à détériorer l'hélicoptère **A,** voire à mettre en danger ses passagers.

Une fois l'hélicoptère **A** posé sur le dispositif **10,** il peut être transporté afin d'être réparé ou directement réparé sur le dispositif **10.**

Par suite, le fluide contenu dans les poches gonflables **12, 18** peut également être évacué de manière progressive et contrôlée, hors de tout ou partie du dispositif **10,** de manière à rapprocher l'hélicoptère **A** du sol **S.**

Sans sortir du cadre de la présente invention, les parois supérieures **14, 20,** de même que les parois inférieures **16, 22** des poches gonflables **12, 18** peuvent être constituées par la combinaison de plusieurs superpositions de matériaux tissés, de couches en polymère, de couches en aramide, de couches en textile réalisées à partir du tissage de fils métalliques, ou de tout autre matériau constituant un renfort pour empêcher les risques de perforation des poches gonflables **12, 18.**

Sans sortir du cadre de la présente invention, le dispositif **10** peut être constitué par toute combinaison de poches gonflables inférieures **12** et de poches gonflables supérieures **18,** le dispositif **10** pouvant, par exemple et de manière non limitative, être constitué d'une unique poche gonflable supérieure **18** ou exclusivement d'une pluralité de poches gonflables supérieures **18.**

On comprend que la combinaison de poches gonflables inférieures et supérieures **12, 18** permet d'adapter les dimensions du dispositif **10** selon la présente invention aux usages recherchés, afin de tenir compte d'une part des contraintes d'installation du dispositif **10,** et d'autre part des contraintes de poids et de dimensions des aéronefs que le dispositif **10** doit réceptionner ; par ailleurs, la combinaison de différentes poches gonflables **12, 18** permet également d'assurer la continuité du fonctionnement du dispositif **10** dans l'éventualité où l'une des poches gonflables **12, 18** serait défectueuse.

En outre, la combinaison de différentes poches gonflables **12, 18** permet de simplifier la fabrication du dispositif **10** et d'en réduire les coûts.

On pourrait également concevoir la présence d'un dispositif de commande configuré pour commander le gonflage des différentes poches gonflables **12, 18** en fonction du type d'hélicoptère **A** à réceptionner ou en fonction des détériorations subies par l'hélicoptère **A.** Un tel dispositif de commande pourrait par exemple être actionné au moment de l'approche de l'hélicoptère **A,** afin de déterminer les poches gonflable **12, 18** devant être gonflées pour mettre en volume le dispositif **10.**

L'ensemble **51** peut également être associé à un plateau mobile sur lequel le dispositif **10,** lorsqu'il n'est pas mis en volume, peut être transporté, le plateau mobile pouvant également être utilisé pour installer et gonfler le dispositif **10** selon la présente invention. On comprend également que l'utilisation d'un tel plateau mobile peut permettre de déplacer directement l'hélicoptère **A** réceptionné sur le dispositif **10,** par exemple pour permettre sa réparation.

L'ensemble de la description ci-dessus est donné à titre d'exemple et n'est donc pas limitatif de l'invention.

En particulier, l'invention, bien que particulièrement adaptée à la réception d'un hélicoptère, peut également être adaptée à la réception de tout aéronef ou de tout autre objet nécessitant une surface sensiblement plane pour être réceptionné.

## Revendications

1. Dispositif (10) pour réceptionner un hélicoptère (A) lors de son atterrissage, comportant au moins une poche gonflable principale (12, 18) comprenant un moyen d'introduction (26) d'un fluide (F) pour gonfler la poche gonflable principale, une paroi supérieure (14, 20) sensiblement plane sur laquelle l'hélicoptère (A) vient se poser, constituée d'au moins une couche textile (30) recouverte d'au moins une couche en polymère (32), et une paroi inférieure (16, 22), ledit dispositif étant **caractérisé en ce que** la poche gonflable principale (12, 18) est formée dans un textile en trois dimensions qui comprend une première et une seconde faces constituant respectivement les parois supérieure (14, 20) et inférieure (16, 22), ledit textile comprenant une pluralité de fils de liaison disposés dans le volume intérieur de la poche gonflable (12, 18) et liant les première et seconde faces entre elles en sorte de fixer la distance les séparant lorsque la poche gonflable principale (12, 18) est gonflée.

2. Dispositif selon la revendication **1, caractérisé en ce que** le polymère est un élastomère.

3. Dispositif selon la revendication **1** ou **2, caractérisé en ce que** les parois supérieure et inférieure définissent deux plans distincts disposés de manière sensiblement parallèle l'un à l'autre.

4. Dispositif selon l'une quelconque des revendications **1 à 3, caractérisé en ce que** la paroi supérieure comprend en outre au moins une couche en aramide (46) recouvrant la couche en polymère (32).

5. Dispositif selon l'une quelconque des revendications **1 à 4, caractérisé en ce que** la paroi supérieure comprend en outre au moins une couche en textile réalisée à partir de fils métalliques recouvrant la couche en polymère (32).

6. Dispositif selon l'une quelconque des revendications **1 à 5, caractérisé en ce que** la poche gonflable principale présente une forme sensiblement rectangulaire, la largeur étant comprise entre 80 et 120 cm, et plus particulièrement comprise entre 90 et 110 cm, la longueur étant comprise entre 150 et 250 cm, et plus particulièrement comprise entre 180 et 230 cm.

7. Dispositif selon l'une quelconque des revendications **1 à 6, caractérisé en ce que** le dispositif comporte en outre au moins une poche gonflable inférieure (12) disposée sous la poche gonflable principale (18).

8. Dispositif selon la revendication **7, caractérisé en ce que** le dispositif comporte en outre au moins une poche gonflable latérale similaire à la poche gonflable principale, les poches gonflables latérale et principale (18) étant disposées côte à côte de manière non contiguë, de manière à définir une dépression (50) formée entre les poches gonflables latérale et principale.

9. Dispositif selon la revendication **7** ou **8, caractérisé en ce qu'**il comporte en outre un moyen de communication (48) permettant au fluide introduit par le moyen d'introduction d'un fluide de gonfler les différentes poches gonflables.

10. Dispositif selon l'une quelconque des revendications **7 à 9, caractérisé en ce que** le dispositif comporte au moins deux moyens d'introduction d'un fluide configurés pour permettre de gonfler de manière indépendante au moins deux poches gonflables.

11. Dispositif selon l'une quelconque des revendications **1 à 10, caractérisé en ce que** le dispositif comporte des moyens d'ancrage (24) configurés pour permettre l'ancrage au sol (S) dudit dispositif avec un élément d'attache rigide enfoncé dans le sol.

12. Dispositif selon l'une quelconque des revendications **1 à 11, caractérisé en ce qu'**il comporte un dispositif d'évacuation (28) configuré pour permettre l'évacuation du fluide contenu dans la poche gonflable principale lorsque la pression du fluide dépasse une valeur limite.

13. Ensemble (51) pour réceptionner un hélicoptère (A) lors de son atterrissage, comportant un dispositif selon l'une quelconque des revendications **1 à 12,** un filet (54) configuré pour recouvrir le dispositif et des moyens de fixation (56) configurés pour fixer le filet au sol.

14. Ensemble selon la revendication **13** et comportant un dispositif selon la revendication **10**, **caractérisé en ce que** l'ensemble comporte en outre un dispositif de commande configuré pour commander le gonflage des différentes poches gonflables indépendamment les unes des autres.

15. Ensemble selon la revendication **13** ou **14**, **caractérisé en ce qu'**il comporte en outre un plateau mobile sur lequel le dispositif peut être gonflé.

## Patentansprüche

1. Vorrichtung (10) zum Aufnehmen eines Hubschraubers (A) bei seiner Landung, umfassend wenigstens eine aufblasbare Haupttasche (12, 18), die ein Mittel zum Einleiten (26) eines Fluids (F) umfasst, um die aufblasbare Haupttasche aufzublasen, eine im Wesentlichen ebene obere Wand (14, 20), auf welcher der Hubschrauber (A) aufsetzt, bestehend aus wenigstens einer Textilschicht (30), die mit wenigstens einer Polymerschicht (32) überzogen ist, sowie eine untere Wand (16, 22), wobei die Vorrichtung **dadurch gekennzeichnet ist, dass** die aufblasbare Haupttasche (12, 18) aus einem dreidimensionalen Textil ausgebildet ist, das eine erste und ein zweite Seite umfasst, die die obere (14, 20) bzw. die untere (16, 22) Wand bilden, wobei das Textil eine Vielzahl von Bindefäden umfasst, die im Innenvolumen der aufblasbaren Tasche (12, 18) angeordnet sind und die erste und die zweite Seite untereinander verbinden, um den sie trennenden Abstand festzulegen, wenn die aufblasbare Haupttasche (12, 18) aufgeblasen ist.

2. Vorrichtung nach Anspruch 1, **dadurch gekennzeichnet, dass** das Polymer ein Elastomer ist.

3. Vorrichtung nach Anspruch 1 oder 2, **dadurch gekennzeichnet, dass** die obere und die untere Wand zwei getrennte Ebenen definieren, die im Wesentlichen parallel zueinander angeordnet sind.

4. Vorrichtung nach einem der Ansprüche 1 bis 3, **dadurch gekennzeichnet, dass** die obere Wand ferner wenigstens eine Aramidschicht (46), welche die Polymerschicht (32) überzieht, umfasst.

5. Vorrichtung nach einem der Ansprüche 1 bis 4, **dadurch gekennzeichnet, dass** die obere Wand ferner wenigstens eine aus Metallfäden hergestellte Textilschicht, welche die Polymerschicht (32) überzieht, umfasst.

6. Vorrichtung nach einem der Ansprüche 1 bis 5, **dadurch gekennzeichnet, dass** die aufblasbare Haupttasche eine im Wesentlichen rechteckige Form aufweist, wobei die Breite zwischen 80 und 120 cm, und insbesondere zwischen 90 und 110 cm beträgt, wobei die Länge zwischen 150 und 250 cm, und insbesondere zwischen 180 und 230 cm beträgt.

7. Vorrichtung nach einem der Ansprüche 1 bis 6, **dadurch gekennzeichnet, dass** die Vorrichtung ferner wenigstens eine aufblasbare untere Tasche (12), welche unter der aufblasbaren Haupttasche (18) angeordnet ist, umfasst.

8. Vorrichtung nach Anspruch 7, **dadurch gekennzeichnet, dass** die Vorrichtung ferner wenigstens eine aufblasbare Seitentasche ähnlich der aufblasbaren Haupttasche umfasst, wobei die aufblasbare Seitentasche und die aufblasbare Haupttasche (18) nicht aneinanderstoßend nebeneinander angeordnet sind, um eine zwischen der aufblasbaren Seitentasche und der aufblasbaren Haupttasche gebildete Vertiefung (50) zu definieren.

9. Vorrichtung nach Anspruch 7 oder 8, **dadurch gekennzeichnet, dass** sie ferner ein Verbindungsmittel (48) umfasst, das dem durch das Mittel zum Einleiten eines Fluids eingeleiteten Fluid ermöglicht, die verschiedenen aufblasbaren Taschen aufzublasen.

10. Vorrichtung nach einem der Ansprüche 7 bis 9, **dadurch gekennzeichnet, dass** die Vorrichtung wenigstens zwei Mittel zum Einleiten eines Fluids umfasst, die dazu ausgelegt sind, zu ermöglichen, wenigstens zwei aufblasbare Taschen unabhängig aufzublasen.

11. Vorrichtung nach einem der Ansprüche 1 bis 10, **dadurch gekennzeichnet, dass** die Vorrichtung Verankerungsmittel (24) umfasst, die dazu ausgelegt sind, die Verankerung der Vorrichtung am Boden (S) mit einem in den Boden eingetriebenen, starren Befestigungselement zu ermöglichen.

12. Vorrichtung nach einem der Ansprüche 1 bis 11, **dadurch gekennzeichnet, dass** sie eine Ablassvorrichtung (28) umfasst, die dazu ausgelegt ist, das Abführen des in der aufblasbaren Haupttasche enthaltenen Fluids zu ermöglichen, wenn der Druck des Fluids einen Grenzwert überschreitet.

13. Anordnung (51) zum Aufnehmen eines Hubschraubers (A) bei seiner Landung, umfassend eine Vorrichtung nach einem der Ansprüche 1 bis 12, ein Netz (54), das dazu ausgelegt ist, die Vorrichtung zu bedecken und Befestigungsmittel (56), die dazu ausgelegt sind, das Netz am Boden zu befestigen.

14. Anordnung nach Anspruch 13 und umfassend eine Vorrichtung nach Anspruch 10, **dadurch gekennzeichnet, dass** die Anordnung ferner eine Steuervorrichtung umfasst, die dazu ausgelegt ist, das Aufblasen der verschiedenen aufblasbaren Taschen unabhängig voneinander zu steuern.

15. Anordnung nach Anspruch 13 oder 14, **dadurch gekennzeichnet, dass** sie ferner eine bewegliche Platte umfasst, auf der die Vorrichtung aufgeblasen werden kann.

## Claims

1. A device (10) for receiving a helicopter (A) while it is landing, comprising at least one main inflatable pouch (12, 18) including injector means (26) for injecting a fluid (F) for inflating the main inflatable pouch, a substantially plane top wall (14, 20) on which the helicopter (A) comes to rest, constituted by at least one textile layer (30) that is covered by at least one polymer layer (32), and a bottom wall (16, 22), said device being **characterized in that** the main inflatable pouch is formed from a 3D textile that comprises first and second faces that constitute respective top (14, 20) and bottom (16, 22) walls, said textile including linking yarns arranged in the inside volume of the inflatable pouch (12, 18) and interlinking the first and second faces together so as to determine the distance between the top and bottom walls when the main inflatable pouch is inflated.

2. A device according to claim 1, **characterized in that** the polymer is an elastomer.

3. A device according to claim 1 or 2, **characterized in that** the top and bottom walls define two distinct planes arranged substantially parallel to each other.

4. A device according to any one of claims 1 to 3, **characterized in that** the top wall further includes at least one aramid layer (46) that covers the polymer layer (32) .

5. A device according to any one of claims 1 to 4, **characterized in that** the top wall further includes at least one textile layer that is made from wires that cover the polymer layer (32).

6. A device according to any one of claims 1 to 5, **characterized in that** the main inflatable pouch presents a shape that is substantially rectangular, the width lying in the range 80 cm to 120 cm, and more particularly in the range 90 cm to 110 cm, the length lying in the range 150 cm to 250 cm, and more particularly in the range 180 cm to 230 cm.

7. A device according to any one of claims 1 to 6, **characterized in that** the device further includes at least one bottom inflatable pouch (12) that is arranged below the main inflatable pouch (18).

8. A device according to claim 7, **characterized in that** the device further includes at least one lateral inflatable pouch that is similar to the main inflatable pouch, the lateral and main inflatable pouches (18) being arranged side by side in non-contiguous manner, so as to define an indentation (50) that is formed between the lateral and main inflatable pouches.

9. A device according to claim 7 or claim 8, **characterized in that** it further includes communication means (48) that enable the fluid injected via the fluid injector means, to inflate the various inflatable pouches.

10. A device according to any one of claims 7 to 9, **characterized in that** the device includes at least two fluid injector means that are configured to enable at least two inflatable pouches to be inflated independently.

11. A device according to any one of claims 1 to 10, **characterized in that** the device includes anchor means (24) that are configured to enable said device to be anchored to the ground (S) with a rigid fastener element that is driven into the ground.

12. A device according to any one of claims 1 to 11, **characterized in that** it includes a discharge device (28) that is configured to enable the fluid contained in the main inflatable pouch to be discharged when the fluid pressure exceeds a limit value.

13. An assembly (51) for receiving a helicopter (A) while it is landing, said assembly comprising a device according to any one of claims 1 to 12, a net (54) that is configured to cover the device, and fastener means (56) that are configured to fasten the net to the ground.

14. An assembly according to claim 13 and including a device according to claim 10, **characterized in that** the assembly further includes a control device that is configured to control inflation of the various inflatable pouches independently of one another.

15. An assembly according to claim 13 or claim 14, **characterized in that** it further includes a movable platform on which the device may be inflated.
